# EUROPÄISCHE PATENTSCHRIFT

(11) **EP 3 484 628 B1**
(45) Veröffentlichungstag und Bekanntmachung des Hinweises auf die Patenterteilung: **26.08.2020**
(21) Anmeldenummer: 16747457.6
(22) Anmeldetag: 18.07.2016
(51) Int. Cl.: B05B 11/00

(54) **SPENDER FÜR FLÜSSIGE BIS PASTÖSE MASSEN**
DISPENSER OF LIQUID OR PASTY PRODUCTS
DISTRIBUTEUR DE PRODUITS LIQUIDES OU PÂTEUX

(43) Veröffentlichungstag der Anmeldung: 22.05.2019
(73) Patentinhaber: RPC Bramlage GmbH, 49393 Lohne (DE)
(72) Erfinder: GÖTTKE, Sabine, 49393 Lohne (DE)
(74) Vertreter: Müller, Enno
(86) Internationale Anmeldenummer: PCT/EP2016/067025
(87) Internationale Veröffentlichungsnummer: WO 2018/014929

(56) Entgegenhaltungen:
- EP-A1- 1 867 397
- EP-A2- 1 332 798
- EP-A2- 2 407 049
- WO-A1-2006/033524
- WO-A1-2014/081136
- DE-A1-102008 030 118
- KR-U- 20090 003 240
- US-A- 4 458 832
- US-A- 5 370 318
- US-A1- 2005 127 100

## Beschreibung

### Gebiet der Technik

Die Erfindung betrifft einen Spender für flüssige bis pastöse Massen, mit einer, einen an einem Pumpkolbenteil angeordneten Pumpkolben aufnehmenden Pumpkammer, einer Pumpkammer mit einem Einlass- und einem Auslassventil, einem Vorratsraum und einem Spenderkopf, wobei der Spenderkopf zur Ausgabe von Masse bei üblicher Spenderhaltung vertikal beweglich ist, wobei weiter in dem Spenderkopf ein Ausgabekanal ausgebildet ist, wobei weiter der Spenderkopf eine Kopfdecke und das Auslassventil ein eingespanntes, flexibles Kreisringteil aufweist.

### Stand der Technik

Spender der in Rede stehenden Art sind bekannt. Diese dienen beispielsweise zur portionierten Ausgabe von Creme, weiter beispielsweise von Pflege-, Zahncreme oder zur Ausgabe von beispielsweise Lotionen, wobei in einem die Masse bevorratenden Behältnis bevorzugt ein Nachlaufkolben vorgesehen ist und die Masse portioniert durch Pumpbewegung des Spenderkopfes ausgegeben wird.

Ein solcher Spender ist beispielsweise aus der DE 10 2005 049 531 A1 bekannt.

Zum Stand der Technik ist weiter auf die US 4 458 832 A, DE 10 2008 030 118 A1, WO 2014/081136 A1, EP 2 407 049 A2, US 2005/127100 A1, EP 1867 397 A1, KR 2009/0003240 U und US 5 370 318 A zu verweisen. Aus der letztgenannten Druckschrift ist ein Spender bekannt, bei welchem in dem Spenderkopf unmittelbar ein Zapfen bezüglich des Kreisringteils nach außen weisend angeordnet ist und außermittig zu dem Zapfen des Spenderkopfes ein Ausgabekanal in einen den Zapfen umgebenden Ringraum mündet und das Einlassventil unterseitig des Zapfens eine den gesamten Innenraum des zugeordneten Stutzens ausfüllende Abschlussfläche aufweist.

### Zusammenfassung der Erfindung

Ausgehend von dem dargelegten Stand der Technik beschäftigt sich die Erfindung mit der Aufgabenstellung, einen hinsichtlich der Teile des Spenders vorteilhaften Spender anzugeben.

Diese Aufgabe ist beim Gegenstand des Anspruches 1 gelöst, wobei darauf abgestellt ist, dass ein pumpkammerseitiges und vorratsraumseitiges Halterungsteil für das Auslass- bzw. das Einlassventil jeweils einen im Einbauzustand zur Kopfdecke hin ragenden Zapfen aufweist, der ein beim Auslassventil wie auch beim Einlassventil vorgesehenes Kreisringteil mittig durchsetzt und dass beide Halterungsteile ausgehend von einer den Zapfen aufweisenden Halterungsteildecke im Einbauzustand einen nach unten offenen Kreisringraum aufweisen.

Es sind zwei Halterungsteile vorgesehen, welche beide ausgebildet sind zur Halterung und Abstützung der ventilseitigen Kreisringteile. In üblicher Spenderhaltung, bei welcher eine den Spender in Längserstreckung durchsetzende Mittelachse (gegebenenfalls Rotationsachse) zumindest annähernd senkrecht gehalten wird, bieten die Halterungsteile beziehungsweise die in Richtung der Kopfdecke weisenden Zapfen der Halterungsteile eine untere Abstützung der Kreisringteile. Bevorzugt sind die Zapfen ausgebildet zur Zusammenwirkung mit Ausformungen des Spenders zur oberseitigen Beaufschlagung der Kreisringteile, womit letztere in ihrer Position gehaltert sind. Die Kreisringteile ragen ventillappenartig in dieser Halterungsstellung nach radial außen frei aus.

Der von der den Zapfen aufweisenden Halterungsteildecke im Einbauzustand nach unten offene Kreisringraum eines jeden Halterungsteiles kann beispielsweise zur Aufnahme weiterer Spenderteile dienen. So kann bei dem dem Auslassventil zugeordneten Halterungsteil eine Pumpkammerwandung in den Kreisringraum im Zuge einer Spenderbetätigung eintauchen. Der Kreisringraum des dem Einlassventil zugeordneten Halterungsteiles kann beispielsweise eine entsprechende Ausformung eines Nachlaufkolbens des die Masse bevorratenden Behälters aufnehmen.

Die Anordnung und Ausbildung der vorbeschriebenen Halterungsteile kann im Zusammenhang mit einer der Pumpkammer zugewandten Ausformung einer Kopfdecke zur Halterung der Kreisringteile dienen. Der der Ausformung zugewandte Zapfen des einlassventilseitigen Halterungsteiles kann mit der Ausformung der Kopfdecke zusammenwirken, beispielsweise zufolge einer Steckverbindung zwischen Zapfen und Ausformung, gegebenenfalls aber auch zufolge einer Rast- oder Klebeverbindung oder dergleichen. Das diesbezügliche Kreisringteil kann hierbei von dem halterungsteilseitigen Zapfen durchsetzt zwischen der Ausformung der Kopfdecke und der Halterungsteildecke eingespannt sein. Eine solche Einspannung erfolgt bevorzugt radial innen, umlaufend zu der von dem Zapfen durchsetzten Kreisringteil-Öffnung. Das Kreisringteil erstreckt sich radial darüber hinaus, zur lappenartigen Überdeckung von im Auslassventil-Bereich vorgesehener Auslassöffnungen.

Es ist hierdurch eine bauteilreduzierte und/oder herstellungstechnisch günstige Lösung zur Halterung des Kreisringteiles gegeben. Das bevorzugt aus einem thermoplastischen Elastomer oder Gummi bestehende Kreisringteil ist in üblicher Spenderhaltung oberseitig durch die an der Kopfdecke ausgebildete Ausformung (unmittelbar) belastet, insbesondere zur Halterung des Kreisringteiles in Zusammenwirkung mit einem weiteren Teil, beispielsweise einem Abschnitt des Pumpkolbens.

Die Ausformung kann, wie auch bevorzugt, einstückig und materialeinheitlich mit der Kopfdecke und somit dem Spenderkopf ausgebildet sein.

Die der Pumpkammer zugewandte Ausformung ist gegenüber einer im Übrigen ausgebildeten Kopfdecke in Richtung auf die Pumpkammer erhaben ausgebildet, weist entsprechend eine Erstreckungsrichtung quer zur Erstreckung der Kopfdecke auf.

Das Kreisringteil des Auslassventils kann auf einem Teil seiner Oberseite unmittelbar der Kopfdecke gegenüberliegen, insbesondere bezüglich der Oberseite, welche nicht von der Ausformung der Kopfdecke überdeckt ist. Bevorzugt erstrecken sich zwischen der Kopfdecke und der Oberseite des Kreisringteils des Auslassventils - mit Ausnahme der bevorzugt zentral auf das Kreisringteil einwirkenden Ausformung - keine weiteren Spenderteile.

Der in Verlagerungsrichtung des Spenderkopfes betrachtete Abstand zwischen der Oberseite des Kreisringteiles des Auslassventiles und der dem Kreisringteil zugewandten Kopfdecke kann kleiner gewählt sein als ein Außendurchmesser des Kreisringteiles. Bevorzugt entspricht der Abstand weniger als dem halben Kreisringteil-Durchmesser bis hin zu einem Achtel des Kreisringteil-Außendurchmessers.

In bevorzugter Ausgestaltung durchströmt bei einer Spenderbetätigung die Masse, die das Auslassventil durchsetzt hat, den Raum zwischen dem auslassventilseitigen Kreisringteil und der Kopfdecke im Wesentlichen rechtwinklig zu der Durchströmungsrichtung in der Pumpkammer. Bezogen ist diese Betrachtung insbesondere mit Bezug auf einen in üblicher Spenderhaltung vertikalen Schnitt durch den Spender, weiter insbesondere durch die Pumpkammer und den sich an das Auslassventil unmittelbar anschließenden Raum. Die Strömungsrichtung in dem sich anschließenden Raum muss nicht streng rechtwinklig zu der Durchsetzungsrichtung der Masse in der Pumpkammer - bei Spenderbetätigung - gerichtet sein. Im Sinne der Erfindung ist auch eine Abweichung vom rechten Winkel im Bereich von ±15° möglich.

Auch kann die der Pumpkammer zugewandte Ausformung zur Halterung des Kreisringteiles in diesen unmittelbar sich anschließenden Raum eintauchen, so dass bei einer Spenderbetätigung die Masse die Ausformung umströmen kann.

Die Pumpkammer kann einen oberen durch den Spenderkopf bewegten Zylinderabschnitt aufweisen. Dieser kann durch eine Pumpkammerdecke begrenzt sein, die wiederum Durchflussöffnungen zu dem Kreisringteil aufweist. Die Durchflussöffnungen können mit Bezug auf einen Grundriss der Pumpkammerdecke entlang einer Kreislinie angeordnet sein, den zur Kopfdecke hinragenden Zapfen bevorzugt umfassend. In der Auslassventil-Verschlussstellung sind die Durchflussöffnungen durch das Kreisringteil dichtend überdeckt.

Ein Außendurchmesser des Kreisringteiles kann einen Innendurchmesser des vorbeschriebenen Zylinderabschnittes übersteigen. So kann der Außendurchmesser des Kreisringteiles dem 1,1- bis 1,5-Fachen des Zylinderabschnitt-Innendurchmessers entsprechen.

Ein den Kreisringraum bildender innerer Zylinderabschnitt kann bei beiden Halterungsteilen innenseitig Rastwulstausbildungen aufweisen. Diese können zur Rastfestlegung weiterer Spenderteile, bspw. eines Pumpkolbens, dienen. Die Rastwulstausbildungen können kreisringartig ausgebildet sein oder auch durch eine Mehrzahl von Vorsprüngen, die bspw. entlang einer Kreislinie angeordnet sind.

Auch kann ein die Außenwand des Kreisringraumes ausbildender äußerer Zylinderabschnitt beider Halterungsteile unterseitig einen horizontal vorstehenden, umlaufenden Rand aufweisen. Ein solcher bevorzugt radial abragender Rand kann eine Anschlagbegrenzung, bspw. im Zuge der Montage des Spenders, bieten. Auch kann ein solcher Rand eine Abstützfläche für weitere Spenderteile, bspw. eine Abstützfläche für eine Feder, insbesondere Druckfeder anbieten.

In insbesondere herstellungstechnisch vorteilhafter Weise können beide Halterungsteile formidentisch ausgebildet sein. So können beide Halterungsteile bspw. im Zuge einer Herstellung im Kunststoff-Spritzverfahren in derselben Spritzform hergestellt werden. Darüber hinaus ergeben sich auch unmittelbare Vorteile bei der Montage, da ein Halterungsteil sowohl auslass- als auch einlassventilseitig nutzbar ist.

Weiter kann der Spender zwei Vorratsräumen und zwei Pumpkammern und zwei unabhängig voneinander zur Ausgabe von Masse betätigbare Spenderköpfe aufweisen, wobei ein Spenderkopf eine eine Außenfläche bildende Spenderkopfwandung aufweist, die in Überdeckung und relativ zu einem Festteil des Spenders geführt und relativ dazu beweglich ist.

Es wird hierzu bspw. auch auf die WO 2007/122087 A1 verwiesen.

Hierbei ist die Spenderkopfwandung beider Spenderköpfe auf einem Teil ihres Umfangs relativ zu der Spenderkopfwandung des anderen Spenderkopfes geführt und beweglich ist und dass die Spenderkopfwandung in dem Bereich, in dem sie relativ zu dem Festteil des Spenders beweglich ist, in einer Richtung senkrecht zur Betätigungsrichtung des Spenderkopfes einen geraden Wandungsabschnitt aufweist.

Die Spenderköpfe des Spenders sind unabhängig voneinander betätigbar. Dies bietet den Vorteil, dass bei Bedarf nur die Masse aus einer Pumpkammer bzw. aus einem die Masse bevorratenden Behältnisbereiches des Spenders ausgegeben wird. Sowohl ein Absenken des Spenderkopfes zur Ausgabe der Masse wie auch die bevorzugt selbsttätige Rückführung des Spenderkopfes in die Ausgangsstellung haben keinen Einfluss auf den weiteren Spenderteil. Auch können beide Spenderköpfe zugleich betätigt werden, so dass über beide Spenderköpfe die jeweiligen Massen zugleich ausgetragen werden können. Darüber hinaus können die Spenderköpfe zugleich aber über unterschiedliche Verlagerungswege betätigt werden.

Es sind so im übertragenen Sinne zwei unabhängig voneinander betätigbare Spender angegeben, welche in einem gemeinsamen Gehäuse, das das Festteil anbietet, aufgenommen sind.

Mit Bezug auf einen Querschnitt quer zur Verlagerungsrichtung der Spenderköpfe durch den Bereich der Spenderköpfe weist jeder Spenderkopf zumindest einen geraden Wandungsabschnitt auf. Dieser ist bevorzugt dem Festteil zugewandt ausgebildet, weiter bevorzugt dem anderen Spenderkopf zugewandt. So verlaufen in einer möglichen Ausgestaltung die geraden Wandungsabschnitte beider Spenderköpfe in Parallelausrichtung zueinander, gegebenenfalls getrennt durch einen Wandungsabschnitt des Festteils.

Der gerade Wandungsabschnitt eines Senderkopfes kann in Zusammenwirkung mit dem Festteil eine Verdrehsicherung anbieten. Darüber hinaus kann hierdurch eine günstige Führung entlang des Festteiles und/oder der Wandung des anderen Spenderkopfes bei Betätigung des Spenderkopfes gegeben sein.

Ein Spenderkopf kann eine Ausgabeöffnung aufweisen, aus welcher die Masse bei einer Spenderkopfbetätigung mit einer mit Bezug auf einen in üblicher Spenderhaltung vertikalen Schnitt durch den Spender im Wesentlichen rechtwinklig zur Betätigungsrichtung des Spenderkopfes gegebenen Ausgaberichtung ausgegeben wird. Auch hier beinhaltet die Definition rechtwinklig eine mögliche Winkelabweichung von beispielsweise ±15°.

Eine Pumpkammer weist eine in Betätigungsrichtung des zugehörigen Spenderkopfes verlaufende Mittelachse auf. In einem Querschnitt, in dem beide Mittelachsen beider Pumpkammern den größten Abstand zueinander aufweisen können die in diesen Querschnitt projizierten Ausgabeöffnungen zu beiden Mittelachsen und zueinander versetzt angeordnet sein. Auch können die diesbezüglichen Kanäle, die die Ausgabeöffnung mit den in Masseausgaberichtung sich an das Auslassventil anschließenden Raum verbindenden Kanäle in einem solchen Querschnitt geradlinig und/oder gleichgerichtet verlaufen.

Darüber hinaus kann die Versetzung zu dem gerade verlaufenden Abschnitt der Spenderkopfwandung gegeben sein.

Die Ausgabeöffnungen können so einen geringeren Abstand zueinander aufweisen als es dem Abstand zwischen den Pumpkammer-Mittelachsen entspricht. Dies bietet eine günstige Ausgabe insbesondere bei gleichzeitiger Betätigung beider Spenderköpfe.

Der in Masseausgaberichtung der jeweiligen Ausgabeöffnung vorgeschaltete Kanal kann, wie auch bevorzugt, mit Bezug auf den vorbeschriebenen Querschnitt parallel ausgerichtet sein zu der die Spenderköpfe gegebenenfalls führenden Spenderkopfwandung. Zudem können die Kanäle tangential in den sich in Masseausgaberichtung an das Auslassventil anschließenden Raum einlaufen.

Bei Ausbildung des Spenders mit in jedem Vorratsraum befindlichem Nachlaufkolben kann der Nachlaufkolben eine der Pumpkammer zugewandte Ausformung aufweisen, zum Einfahren in eine vorratsraumseitige Anschlussöffnung der Pumpkammer, wobei eine Pumpkammer eine in Betätigungsrichtung des Spenderkopfes verlaufende Mittelachse aufweist und in einem Querschnitt, in dem beide Mittelachsen der Pumpkammern den größten Abstand zueinander aufweisen, die Ausformungen bezüglich jedes Nachlaufkolbens außermittig ausgebildet sind.

Zufolge derartiger Ausbildung und entsprechender Anordnung der der Pumpkammer zugewandten Ausformung in Zusammenwirkung mit der vorratsraumseitigen Anschlussöffnung ist eine in dem Behälter beziehungsweise in dem Vorratsraum verbleibende Restmenge an Masse auf ein Minimum reduziert. Durch die außermittige Anordnung der kolbenseitigen Ausformung ist insgesamt eine günstige Anordnung der pumpkammerseitigen Spenderteile erreichbar.

Bevorzugt ist die außermittige Anordnung der kolbenseitigen Ausformungen in Richtung auf eine die Vorratsräume trennende Spenderteilwandung gegeben.

Auch kann ein Nachlaufkolben einen Grundriss aufweisen, mit einer teilweise geraden und teilweise gekrümmt verlaufenden Randkante. Auch kann eine gekrümmt verlaufende Randkante einen kleineren Krümmungsradius aufweisen als eine weitere, entlang einer Geraden orientierte Randkante des Nachlaufkolbens. So kann ein Nachlaufkolben in einem Grundriss halbkreisscheibenförmig gestaltet sein, was insgesamt zu einem handlichen und bevorzugt mit einer Hand zu ergreifenden Spender mit kreisscheibenförmiger Gesamt-Querschnittsfläche führen kann, bei welchem die geraden Randkanten der Nachlaufkolben beziehungsweise die weniger stark gekrümmten Randkanten der Nachlaufkolben aufeinander zu weisen.

Die vor- oder nachstehend angegebenen Bereiche beziehungsweise Wertebereiche oder Mehrfachbereiche schließen hinsichtlich der Offenbarung auch sämtliche Zwischenwerte ein, insbesondere in 1/10-Schritten der jeweiligen Dimension, gegebenenfalls also auch dimensionslos. Beispielsweise beinhaltet die Angabe 1,1-Fach bis 1,5-Fach auch die Offenbarung von 1,11- bis 1,5-Fach, 1,1- bis 1,49-Fach, 1,11- bis 1,49-Fach, 1,27- bis 1,38-Fach, etc. Diese Offenbarung kann einerseits zur Eingrenzung einer genannten Bereichsgrenze von unten und/oder oben, alternativ oder ergänzend aber zur Offenbarung eines oder mehrerer singulärer Werte aus einem jeweilig angegebenen Bereich dienen.

### Kurze Beschreibung der Zeichnungen

Nachstehend ist die Erfindung anhand der beigefügten Zeichnungen erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: einen Spender in Vorderansicht, eine erste Ausführungsform betreffend;
- Fig. 2: den Schnitt gemäß der Linie II-II in Figur 1;
- Fig. 3: die Herausvergrößerung des Bereiches III in Figur 2;
- Fig. 4: ein Halterungsteil des Spenders in einer Einzel-Seitenansicht;
- Fig. 5: die Draufsicht hierzu;
- Fig. 6: den Schnitt gemäß der Linie VI-VI in Figur 5;
- Fig. 7: in einer zweiten Ausführungsform einen Spender in Vorderansicht;
- Fig. 8: die Draufsicht hierzu;
- Fig. 9: eine Seitenansicht gegen den Spender;
- Fig. 10: den Spender in perspektivischer Darstellung;
- Fig. 11: den Schnitt gemäß der Linie XI-XI in Figur 9;
- Fig. 12: die Herausvergrößerung des Bereiches XII in Figur 11;
- Fig. 13: den Schnitt gemäß der Linie XIII-XIII in Figur 12;
- Fig. 14: den Schnitt gemäß der Linie XIV-XIV in Figur 11;
- Fig. 15: den Schnitt gemäß der Linie XV-XV in Figur 12.

### Beschreibung der Ausführungsformen

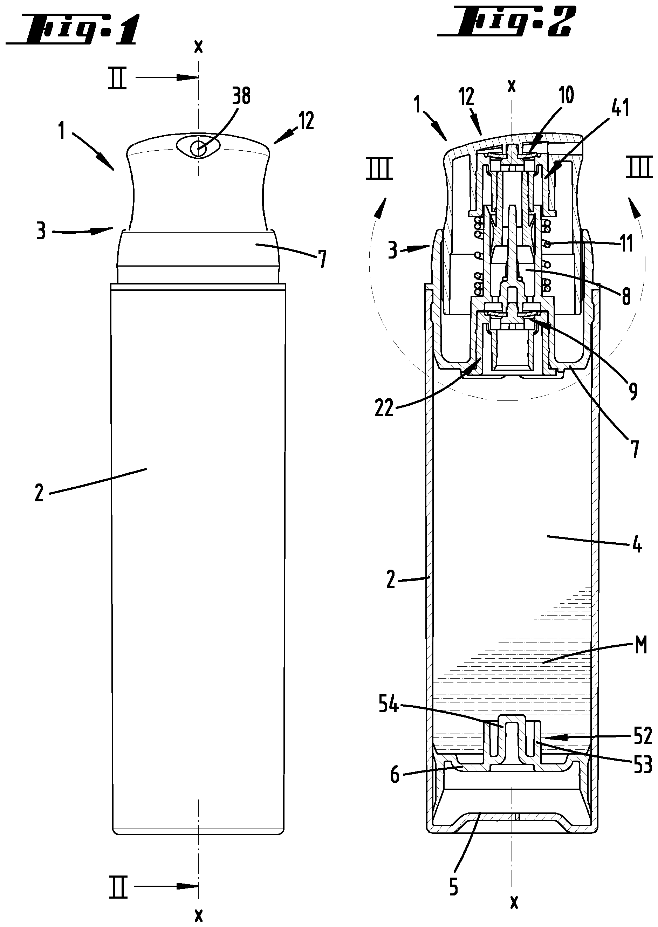

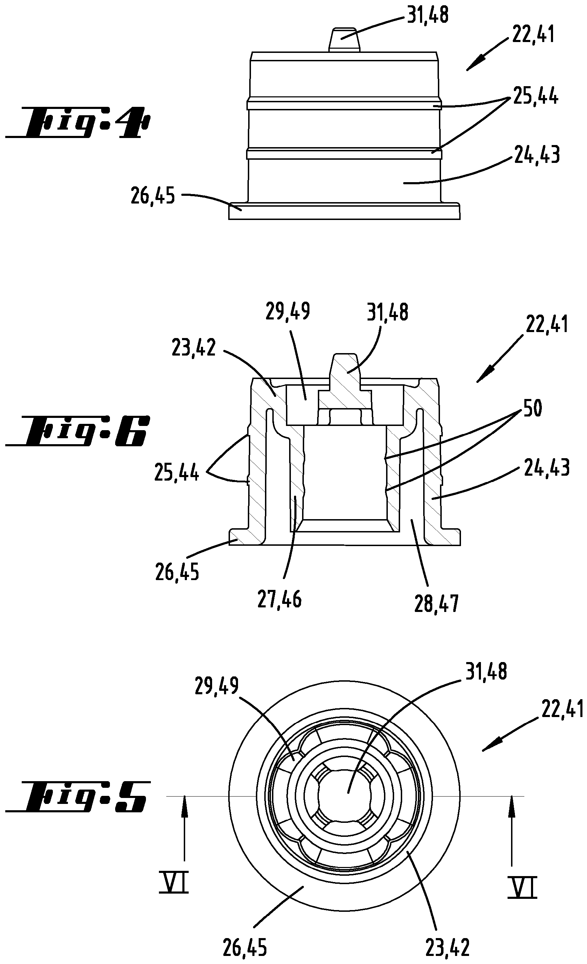

Dargestellt und beschrieben ist, zunächst mit Bezug zu den Figuren 1 bis 6, ein erstes Ausführungsbeispiel eines Spenders 1.

Der Spender 1 setzt sich im Wesentlichen zusammen aus einem hohlzylinderförmigen Vorratsbehältnis 2 mit einem mit diesem gekoppelten Ausgabekopf 3, welch letzterer in der dargestellten Nichtbenutzungsstellung von einer nicht dargestellten Kappe überdeckt sein kann.

Die Formteile des Spenders 1 bestehen überwiegend aus einem Kunststoff-Werkstoff, wie bspw. Polyethylen, und sind bevorzugt im Kunststoff-Spritzgussverfahren hergestellt. Wesentliche Ausnahmen sind jedenfalls bei den dargestellten Ausführungsbeispielen die Ventile, die aus einem gummiartigen Werkstoff bestehen können, der weiter zwar ein thermoplastisches Elastomer sein kann (und insofern auch im Spritzgussverfahren Verwendung finden kann) bevorzugt aber auch beim Ausführungsbeispiel vulkanisiert sein kann. Darüber hinaus ist eine Rückstellfeder 11 vorgesehen, die eine Metallfeder ist.

Das Vorratsbehältnis 2 bietet einen Vorratsraum 4 an und weist einen im Wesentlichen (bis auf eine Entlüftungsbohrung) geschlossenen Behälterboden 5 auf. Die Behältnisöffnung weist in Richtung auf den Ausgabekopf 3.

In dem Vorratsraum 4 ist ein zufolge Unterdruck bewegbarer Nachlaufkolben 6 positioniert, über welchen die auszugebende Masse M in Richtung auf den Ausgabekopf 3 transportiert wird.

Der Ausgabekopf 3 setzt sich im Wesentlichen zusammen aus einem topfförmigen Unterteil 7, welches eine Trennwand zu dem Vorratsbehältnis beziehungsweise zu dem Vorratsraum 4 bildet, einer Pumpkammer 8 mit einem Einlassventil 9 und einem Auslassventil 10 und einem sich auf einer Rückstellfeder 11 abstützenden Spenderkopf 12.

Unterteil 7, Pumpkammer 8, die Rückstellfeder 11 und eine Außenwandung 13 des Spenderkopfes 12 können, wie auch bevorzugt, rotationssymmetrisch auf einer gemeinsamen Achse x angeordnet sein, welche Achse zugleich auch die Körperachse des Vorratsbehältnisses 2 bilden kann.

Der Unterteilboden 14 des Unterteils 7 weist einen zentralen, in Richtung auf den Spenderkopf 12 eingezogenen, bevorzugt zur Achse x konzentrisch ausgeformten Topfabschnitt 15 auf. Die sich hierbei einstellende, zur Erstreckungsebene des Unterteilbodens 14 in Axialrichtung beabstandete Topfdecke 16 trägt oberseitig, d.h. der Topfwandung 17 abgewandt, die konzentrisch zur Achse x verlaufende Pumpkammerwandung 18. Diese ist frei umfasst von der Rückstellfeder 11, welche sich fußseitig auf der Topfdecke 16 abstützt.

Zentral wächst aus der Topfdecke 16, umfasst von der Pumpkammerwandung 18, ein Dorn 19 entlang der Achse x. Dieser Dorn 19 kann ausgehend von der Topfdecke 16 eine an die Pumpkammerwandung 18 angepasste Länge entlang der Achse x aufweisen.

Der mittlere Durchmesser des Dornes 19 kann etwa einem Viertel bis einem Sechstel des Innendurchmessers der Pumpkammer 8 entsprechen.

Entlang einer Kreislinie radial außerhalb des Wurzelbereiches des Dornes 19 an der Topfdecke 16 sind in der Topfdecke 16 Durchflussöffnungen 20 für die Masse M ausgebildet. Diese erstrecken sich in einem Bereich der Topfdecke 16 zwischen Dorn 19 und Pumpkammerwandung 18.

Unterseitig, d.h. dem Dorn 19 abgewandt, ist an der Topfdecke 16 ein nach unten in Richtung auf den Vorratsraum 4 gerichteter Rastaufnahmeabschnitt 21 angeformt. Dieser ragt entsprechend in die Topföffnung des Topfabschnittes 15.

In dem Topfabschnitt 15 ist ein unteres Halterungsteil 22 festgelegt. Dieses ist bevorzugt topfartig ausgebildet, mit einer Topfdecke 23, die in Anordnungsstellung etwa um das Axialmaß des Rastaufnahmeabschnittes 21 beabstandet ist zur zugewandten Unterfläche der Topfdecke 16 des Unterteils 7.

Der sich unterseitig an die Halterungsteildecke 23 anschließende kreisringförmige Zylinderabschnitt 24 kann wandungsaußenseitig Rastwulstausbildungen 25 zur rastenden Zusammenwirkung mit der Topfwandung 17 aufweisen.

Der Zylinderabschnitt 24 geht fußseitig, d.h. der Halterungsteildecke 23 abgewandt, in einen horizontal vorstehenden, umlaufenden Rand 26 über. Dieser stützt sich unterseitig an dem Unterteilboden 14 ab.

Weiter ist an der Halterungsteildecke 23 ein innerer, bevorzugt im Grundriss kreisringartiger Zylinderabschnitt 27 angeformt, der zusammen mit dem äußeren Zylinderabschnitt 24 einen nach unten offenen Kreisringraum 28 bildet.

Im Übergangsbereich von innerem Zylinderabschnitt 27 in die Halterungsteildecke 23 sind mit Bezug auf einen Grundriss der Halterungsteildecke 23 umlaufend entlang einer Kreislinie Durchflussöffnungen 29 ausgebildet. Diese sind überdeckt von einem, das Auslassventil 9 im Wesentlichen ausformenden flexiblen Kreisringteil 30.

Das Kreisringteil 30 ist zentral durchsetzt von einem oberseitig an der Halterungsteildecke 23 angeformten Zapfen 31, welcher rastgehaltert sein kann in dem Rastaufnahmeabschnitt 21 des Unterteils 7.

Das Kreisringteil 30 ist so eingespannt zwischen dem Halterungsteil 22 und dem Unterteil 7. Der radial äußere umlaufende Bereich des Kreisringteiles 30 kann zum Öffnen des Ventils in üblicher Weise flexibel auflappen.

In der Pumpkammer 8 ist ein in Axialrichtung beweglich gehaltener Pumpkolben 32 angeordnet. Dieser gleitet in üblicher Weise mit umlaufenden Dichtlippen entlang der Innenseite der Pumpkammerwandung 18.

Der Pumpkolben 32 ist mit einem hohlzylinderartigen Kolbenhals 33 versehen. Dieser erstreckt sich ausgehend von dem Pumpkolben 32 in eine von dem Unterteil 7 in Axialrichtung wegweisende Richtung.

Der Spenderkopf 12 mit seiner Außenwandung 13 ist in Axialrichtung relativ verlagerbar gegenüber dem an dem Vorratsbehältnis 2 befestigten, beispielsweise mit diesem verprellten Unterteil 7.

Der Spenderkopf 12 weist zur Betätigung desselben oberseitig eine Beaufschlagungsfläche 34 auf, außenseitig einer Kopfdecke 35.

Innenseitig der Kopfdecke 35 erstreckt sich bevorzugt koaxial zur Achse x ein Aufnahmezylinder 36 mit einem Innendurchmesser, der dem Innendurchmesser des unterteilseitigen Topfabschnittes 15 entspricht. Auch kann im Wesentlichen die axiale Länge des Aufnahmezylinders 36 der des Topfabschnittes 15 entsprechen.

Ausgehend von dem Aufnahmezylinder 36 erstreckt sich unmittelbar unterseitig der Kopfdecke 35 ein Ausgabekanal 37. Dieser endet wandungsseitig in einer Ausgabemündung 38.

Abgewandt zur Ausgabemündung 38 mündet der Ausgabekanal 37 in einem zentralen Raum 39.

Unterseitig von der Kopfdecke 35 abragend taucht eine im Wesentlichen kreisringförmige Ausformung 40 in den Raum 39 ein. Diese nimmt bevorzugt zentral die Achse x auf.

In dem Aufnahmezylinder 36 des Spenderkopfes 12 ist ein weiteres Halterungsteil 41 rastgehaltert. Dieses ist bevorzugt formidentisch zu dem unteren Halterungsteil 22, weist demnach eine Halterungsteildecke 42, einen äußeren Zylinderabschnitt 43, eine äußere Rastausbildung 44, einen Rand 45 und einen inneren Zylinderabschnitt 46 auf. Beide Zylinderabschnitte 43 und 46 begrenzen einen Kreisringraum 47. Deckenoberseitig ist auch an diesem Halterungsteil 41 ein Zapfen 48 angeformt. Diesen umgeben die Halterungsteildecke 42 durchsetzende Durchflussöffnungen 49.

Das Halterungsteil 41 ist mittels der wandungsaußenseitigen Rastausbildungen 44 an dem Aufnahmezylinder 36 rastgehaltert. Der Rand 45 stützt sich hierbei an der umlaufenden freien Stirnfläche des Aufnahmezylinders 36 ab und bietet zudem die bei üblicher Spenderhaltung obere Abstützung für die Rückstellfeder 11.

Der Kolbenhals 23 taucht radial innen in den inneren Zylinderabschnitt 46 ein und wirkt hier mit innenseitig des inneren Zylinderabschnittes 46 ausgeformten Rastwulstausbildungen 50 zusammen. Derartige innere Rastwulstausbildungen 50 sind auch bei dem unteren Halterungsteil 22 vorgesehen.

Der halterungsteilseitige Zapfen 48 taucht in die kopfdeckenseitige Ausformung 40 und durchsetzt hierbei eine das Ausgangsventil 10 im Wesentlichen ausbildendes flexibles Kreisringteil 51. Dieses ist somit zwischen dem Halterungsteil 41 und der Ausformung 40 gefasst. Das Kreisringteil 51 überdeckt mit dessen radial auslappendem Bereich die Durchflussöffnungen 49.

Der nicht von der Ausformung 40 überdeckte Bereich des Kreisringteiles 51 liegt mit dessen Oberseite unmittelbar der Kopfdecke 35 gegenüber. Der Raum 39 erstreckt sich somit in diesem Bereich allein oberseitig und unterseitig begrenzt durch die Kopfdecke 35 und das Kreisringteil 51.

Darüber hinaus kann die Oberseite des Kreisringteiles 51 sich in etwa auf einer Ebene erstrecken, die den Ausgabekanal 37 im vertikal unteren Bereich schneidet oder tangiert.

Der Außendurchmesser des Kreisringteiles 51 kann größer gewählt sein als der Innendurchmesser des inneren Zylinderabschnittes 46. So kann der Durchmesser des Kreisringteiles 51 dem 1,5- bis 2,5-Fachen, weiter beispielsweise dem 2-Fachen des Zylinderabschnitt-Innendurchmessers entsprechen.

Der in dem Vorratsraum 4 angeordnete Nachlaufkolben 6 weist eine bevorzugt zentrale, in Richtung auf den Ausgabekopf 3 gerichtete Ausformung 52 auf. Diese ist insgesamt domartig gestaltet, entsprechend in Kolbenlaufrichtung sich über einen Kolbenboden hinaus in den Vorratsraum 4 erstreckend.

Die Ausformung 52 kann einen radial äußeren, im Grundriss kreisringförmigen Zylinderabschnitt 53 aufweisen und einen radial inneren Topf 54 mit einer Topfwandung und einer Topfdecke.

Die Ausformung 52 ist ausgebildet und geeignet zum Einfahren in eine vorratsraumseitige Anschlussöffnung, die bevorzugt durch das untere Halterungsteil 22 angeboten wird. Bei vollständig angehobenem Nachlaufkolben 6 taucht der Zylinderabschnitt 53 in den diesbezüglichen Kreisringraum 28 und der Topf 54 in den durch den inneren Zylinderabschnitt 27 gegebenen Raum des Halterungsteils 22 ein.

Darüber hinaus ist weiter bevorzugt der Boden des Nachlaufkolbens 6 an die zugewandte Kontur des Unterteils 7 angepasst.

Eine Restmenge an Masse M bei vollständig angehobenem Nachlaufkolben 6 ist so auf ein Minimum reduziert.

Die Funktionsweise des Spenders 1 ist insofern bekannt, dass durch Pumpbewegung des Spenderkopfes 12 und damit einhergehendem Wechsel von Unter- und Überdruck eine portionierte Menge an pastöser Masse M ausgegeben wird.

Insbesondere durch die Anordnung des Auslassventils 10 außerhalb, konkret oberhalb der Pumpkammer 8, ist bei ausreichendem Durchmesser des diesbezüglichen Kreisringteiles 51 eine durchmessermäßige Verringerung der Pumpkammer 8 ermöglicht. So kann bei einem üblichen, spürbaren Hub (Verlagerungsweg des Spenderkopfes 12) ein vergleichsweise kleiner Anteil an Masse M ausgegeben werden. Der zentrale, in die Pumpkammer 8 einragende Dorn 19 trägt weiter zur Verringerung des Pumpkammervolumens bei.

Durch Druckbeaufschlagung auf den Spenderkopf 12 und damit einhergehender Abwärtsverlagerung (Befestigungsöffnung r) desselben wird in der Pumpkammer 8 ein Überdruck erzeugt, zufolge dessen die in dieser Pumpkammer 8 bevorratete Portion durch das geöffnete Auslassventil 10 und den Ausgabekanal 37 austreten kann. Das Einlassventil 9 ist zufolge des Überdrucks geschlossen.

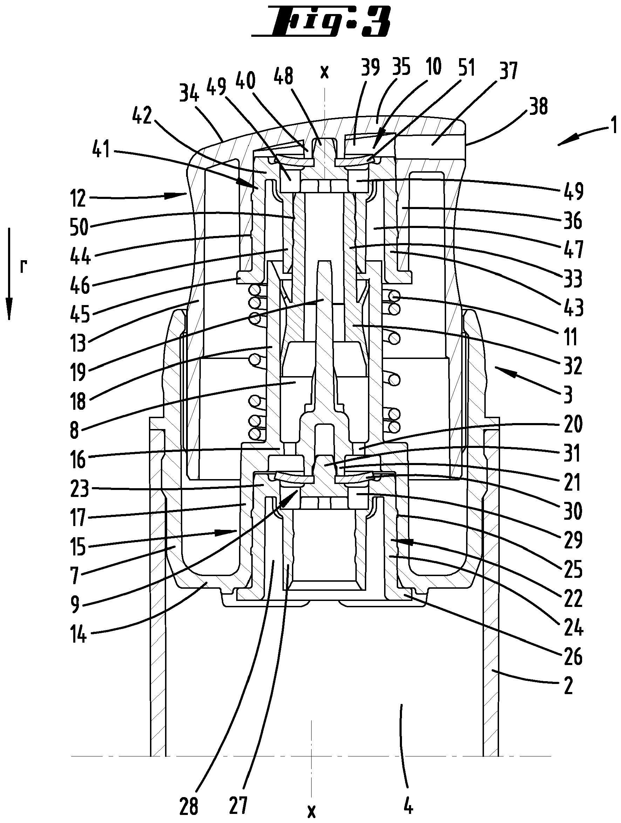

Der Raum 39 zwischen dem Kreisringteil 51 und der Kopfdecke 35 wird von der Masse M, die zuvor das Auslassventil 10 durchsetzt hat, im Wesentlichen rechtwinklig zu der Durchströmungsrichtung innerhalb der Pumpkammer 8 durchströmt. So ist weiter auch der Ausgabekanal 37 im Wesentlichen mit Bezug auf einen Vertikalschnitt gemäß Figur 3 rechtwinklig zur Achse x ausgerichtet.

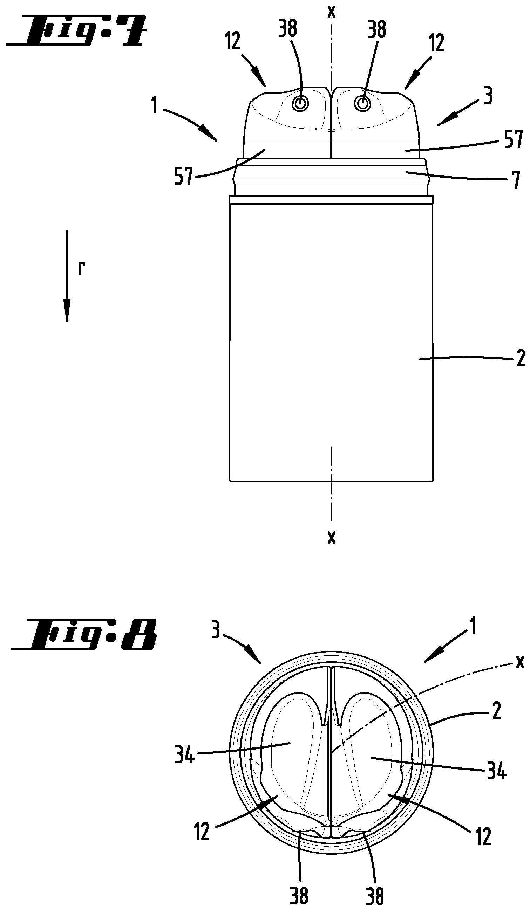

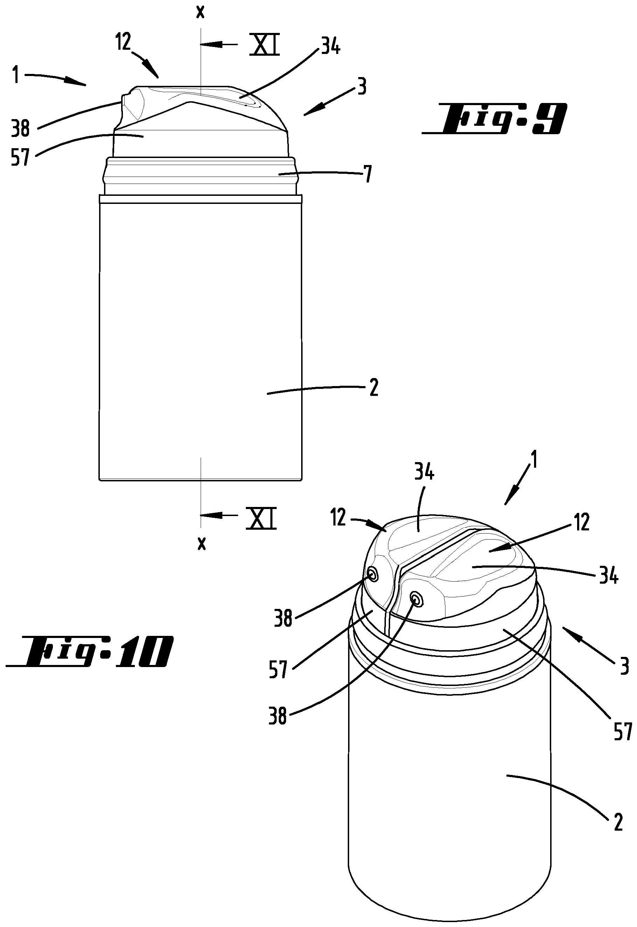

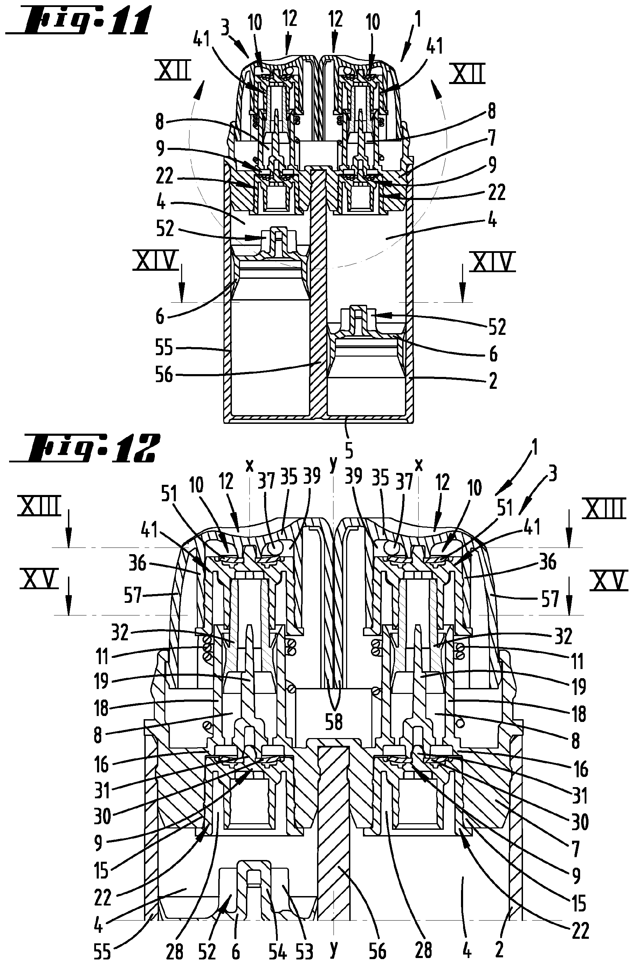

Die Figuren 7 bis 15 zeigen eine zweite Ausführungsform des Spenders 1. Dieser ist als Doppelspender ausgebildet, mit zwei Vorratsräumen 4, zwei Ausgabeköpfen 3 mit Spenderköpfen 12 sowie zwei Nachlaufkolben 6. Die Anordnung und Ausbildung der Eingerichte der Ausgabeköpfe 3, wie Pumpkammer 8, Pumpkolben 32, Halterungsteile 22 und 41 sowie die Ausbildung von Einlass- und Auslassventil 9, 10 entsprechen der vorbeschriebenen Ausgestaltung, womit auf die diesbezüglichen Ausführungen vollinhaltlich Bezug genommen wird.

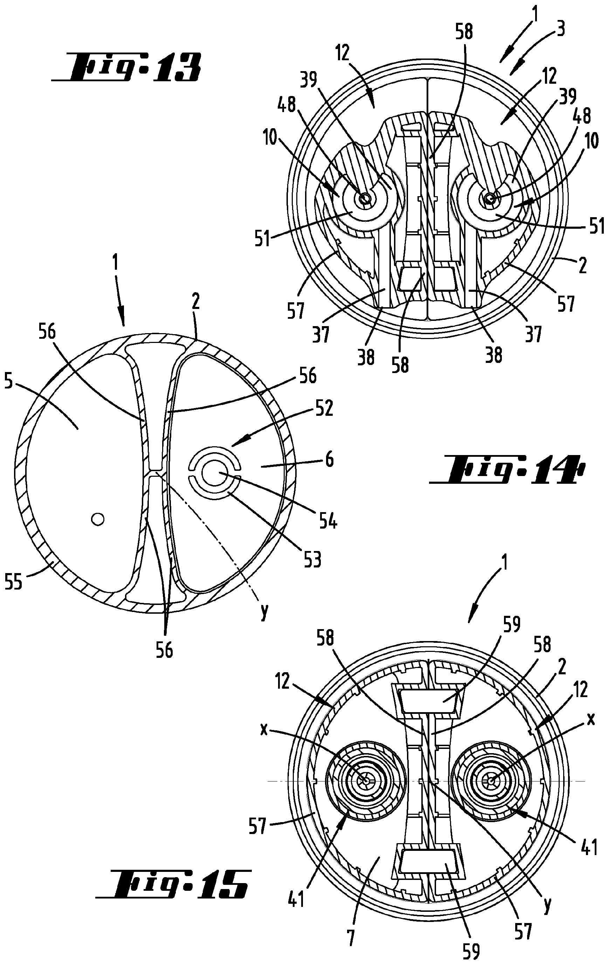

Die Vorratsräume 4 sind durch ein gemeinsames Festteil 55 gebildet. Dieses kann einen kreisförmigen Grundriss gemäß Figur 14 aufweisen, mit zwei beidseitig einer Spenderachse y sekantenartig verlaufenden Trennwänden 56.

Das Festteil 55 ist mit einem Unterteil 7 des Ausgabekopfes 3 verbunden, welches Unterteil 7 bevorzugt einstückig beide Vorratsräume 4 öffnungsseitig überbrückt.

Das Unterteil 7 trägt jeweils zugeordnet einem Spenderkopf 12 die jeweilige Pumpkammerwandung 18 und einen zentralen in die Pumpkammerwandung 18 einragenden Dorn 19.

Unterseitig ist im Bereich einer jeweiligen Topfwandung 17 das untere Halterungsteil 22 verrastet, unter Zwischenlegung des einlassventilseitigen Kreisringteils 30.

Jeder Spenderkopf 1 trägt unterseitig einen Aufnahmezylinder 36 zur Rasthalterung des oberen Halterungsteiles 41. Auch hier ist jeweils zwischen einem Halterungsteil 41 und der Kopfdecke 35 zur Ausbildung des Auslassventils 10 ein Kreisringteil 51 gehaltert.

Die Spenderköpfe 12 sind unabhängig voneinander linear in Erstreckungsrichtung der Achse y verlagerbar, dies unter entsprechendem Mitschleppen der jeweiligen Pumpkolben 32. So kann durch Abwärtsverlagerung beziehungsweise Betätigung nur eines Spenderkopfes 12 die in dem zugeordneten Vorratsraum 4 bevorratete Masse ausgegeben werden. Auch kann eine gleichzeitige Betätigung beider Spenderköpfe 12 erfolgen.

Die Spenderköpfe 12 weisen mit Bezug auf einen Grundriss gemäß Figur 8 eine im Wesentlichen halbkreisförmige Kontur auf, mit einer entlang einer Halbkreislinie verlaufenden Spenderkopfwandung 57 und einem zumindest annähernd entlang einer Radialen zur Spenderachse y verlaufenden Wandungsabschnitt 58. Die Wandungsabschnitte 58 beider Spenderköpfe 12 können aneinander anliegen und sind so relativ zueinander geführt und in Achsrichtung des Spenders 1 beweglich.

Darüber hinaus kann eine Führung der Spenderköpfe 12 an dem Festteil 55 gegeben sein, beispielsweise durch, die Trennungsebene zwischen den geradlinig verlaufenden Wandungsabschnitten 58 querende Führungsblöcke 59, die in entsprechende Einbuchtungen der Wandungsabschnitte 58 eingreifen.

Die Achsen x eines jeden Spenderkopfes 12, entlang welcher Achsen x die spenderkopfseitigen Teile, wie Pumpkammer und Halterungsteile sowie Einlass- und Auslassventile, angeordnet sind, liegen mit Bezug auf einen Querschnitt gemäß Figur 15 auf einer Linie, die rechtwinklig verlaufen kann zu einer Trennungsebene der Spenderköpfe 12 zwischen den geradlinigen Wandungsabschnitten 58. Weiter bevorzugt liegt auf dieser die Achse x verbindenden Linie auch die Spenderachse y, die das Festteil 55 zentral durchsetzt.

Die Achsen x können hierbei gleich beabstandet zu der Spenderachse y liegen.

Oberhalb des Auslassventils 10, insbesondere oberhalb des Kreisringteils 51, ergibt sich zwischen dem Kreisringteil 51 und der Unterseite der Kopfdecke 35 ein insgesamt annähernd kreisringförmiger Raum 39, von welchem tangential der jeweilige Ausgabekanal 37 ausgeht.

Mit Bezug auf die Querschnittdarstellung in Figur 13 ergibt sich eine bevorzugte Parallelausrichtung der Ausgabekanäle 37 zueinander sowie zu den geradlinig verlaufenden Wandungsabschnitten 58 der Spenderköpfe 12.

Weiter sind die Ausgabekanäle 37 so angeordnet, dass deren Ausgabeöffnungen 38 mit Bezug zu den Achsen x in Richtung auf die gerade verlaufenden Wandungsabschnitte 58 hin versetzt angeordnet sind. Entsprechend ist ein quer zu den Achsen x betrachtetes Abstandsmaß zwischen den Ausgabeöffnungen 38 kleiner gewählt als das in selber Richtung betrachtete Abstandsmaß der Achsen x zueinander.

Die Nachlaufkolben 6 in jedem Vorratsraum 4 weisen eine Grundrisskontur gemäß Figur 14 auf, mit einer teilweise an einer Geraden orientierten, insbesondere entlang der Trennwand 56 des Festteiles 55 verlaufenden Randkante und einer gekrümmt verlaufenden Randkante mit einem an den Innenradius des Festteiles 55 angepassten Krümmungsmaß.

Die kolbenseitige Ausformung 52 ist entsprechend der auf der Achse x angeordneten unteren Halterungsteil 22 außermittig der Kolbenfläche angeordnet, weiter insbesondere in Verlängerung der spenderkopfseitigen Achse x. Die Außermittigkeit bezieht sich hierbei auf einen Abstand der Achse x zu den, eine die Achsen x verbindenden, quer zu den Achsen x verlaufenden Linie schneidenden Randkanten des Nachlaufkolbens 6. Dieser Abstand ist zu der äußeren, gekrümmt verlaufenden Randkante größer als zu der inneren, weniger gekrümmt beziehungsweise gerade verlaufenden Randkante. Es kann ein diesbezügliches Verhältnis von 2:1 oder 1,5:1 gegeben sein.

**Liste der Bezugszeichen**

| | | | |
|---|---|---|---|
| 1 | Spender | 32 | Pumpkolben |
| 2 | Vorratsbehältnis | 33 | Kolbenhals |
| 3 | Ausgabekopf | 34 | Beaufschlagungsfläche |
| 4 | Vorratsraum | 35 | Kopfdecke |
| 5 | Behälterboden | 36 | Aufnahmezylinder |
| 6 | Nachlaufkolben | 37 | Ausgabekanal |
| 7 | Unterteil | 38 | Ausgabeöffnung |
| 8 | Pumpkammer | 39 | Raum |
| 9 | Einlassventil | 40 | Ausformung |
| 10 | Auslassventil | 41 | Halterungsteil |
| 11 | Rückstellfeder | 42 | Halterungsteildecke |
| 12 | Spenderkopf | 43 | Zylinderabschnitt |
| 13 | Außenwandung | 44 | Rastausbildung |
| 14 | Unterteilboden | 45 | Rand |
| 15 | Topfabschnitt | 46 | Zylinderabschnitt |
| 16 | Topfdecke | 47 | Kreisringraum |
| 17 | Topfwandung | 48 | Zapfen |
| 18 | Pumpkammerwandung | 49 | Durchflussöffnung |
| 19 | Dorn | 50 | Rastwulstausbildung |
| 20 | Durchflussöffnung | 51 | Kreisringteil |
| 21 | Rastaufnahmeabschnitt | 52 | Ausformung |
| 22 | Halterungsteil | 53 | Zylinderabschnitt |
| 23 | Halterungsteildecke | 54 | Topf |
| 24 | Zylinderabschnitt | 55 | Festteil |
| 25 | Rastausbildung | 56 | Trennwand |
| 26 | Rand | 57 | Spenderkopfwandung |
| 27 | Zylinderabschnitt | 58 | Wandungsabschnitt |
| 28 | Kreisringraum | 59 | Führungsblock |
| 29 | Durchflussöffnung | | |
| 30 | Kreisringteil | r | Betätigungsrichtung |
| 31 | Zapfen | x | Achse |
| y | Spenderachse | | |
| M | Masse | | |

## Patentansprüche

1. Spender (1) für flüssige bis pastöse Massen (M), mit einer, einen an einem Pumpkolbenteil angeordneten Pumpkolben (32) aufnehmenden Pumpkammer (8), wobei die Pumpkammer (8) ein Einlass- (9) und ein Auslassventil (10) aufweist, einem Vorratsraum (4) und einem Spenderkopf (12),
wobei der Spenderkopf (12) zur Ausgabe von Masse (M) bei üblicher Spenderhaltung vertikal beweglich ist, wobei weiter in dem Spenderkopf (12) ein Ausgabekanal (37) ausgebildet ist, der Spenderkopf (12) eine Kopfdecke (35) und das Auslassventil (10) ein eingespanntes, flexibles Kreisringteil (51) aufweist, **dadurch gekennzeichnet, dass** ein pumpkammerseitiges und vorratsraumseitiges Halterungsteil (22, 41) für das Auslass- (10) bzw. das Einlassventil (9) jeweils einen im Einbauzustand zur Kopfdecke (35) hin ragenden Zapfen (31, 48) aufweist, der das beim Auslassventil (10) vorgesehene wie auch ein beim Einlassventil (9) vorgesehenes Kreisringteil (30, 51) mittig durchsetzt und dass beide Halterungsteile (22, 41) ausgehend von einer den Zapfen (31, 48) aufweisenden Halterungsteildecke (23, 42) im Einbauzustand einen nach unten offenen Kreisringraum (28, 47) aufweisen.

2. Spender nach Anspruch 1, **dadurch gekennzeichnet, dass** eine der Pumpkammer (8) zugewandte Ausformung (40) der Kopfdecke (35) zur Halterung des Kreisringteils (51) dient.

3. Spender nach einem der vorhergehenden Ansprüche, **dadurch gekennzeichnet, dass** das Kreisringteil (51) des Auslassventils (10) auf einem Teil seiner Oberseite unmittelbar der Kopfdecke (35) gegenüber liegt.

4. Spender nach einem der vorhergehenden Ansprüche, **dadurch gekennzeichnet, dass** ein Raum (39) zwischen dem Kreisringteil (51) und der Kopfdecke (35) von der Masse (M), die das Auslassventil (10) durchsetzt hat, im Wesentlichen rechtwinklig zu der Durchströmungsrichtung in der Pumpkammer (8) durchströmt ist.

5. Spender nach einem der vorhergehenden Ansprüche, **dadurch gekennzeichnet, dass** die Pumpkammer (8) einen oberen durch den Spenderkopf (12) bewegten Zylinderabschnitt (43) aufweist, der durch eine Pumpkammerdecke, die Durchflussöffnungen (49) zu dem Kreisringteil (51) aufweist, begrenzt ist, und dass ein Außendurchmesser des Kreisringteils (51) einen Innendurchmesser des Zylinderabschnitts (43) übersteigt.

6. Spender nach einem der vorhergehenden Ansprüche, **dadurch gekennzeichnet, dass** ein den Kreisringraum (28, 47) bildender innerer Zylinderabschnitt (27, 46) bei beiden Halterungsteilen (22, 41) innenseitig Rastwulstausbildungen (50) aufweist.

7. Spender nach Anspruch 6, **dadurch gekennzeichnet, dass** ein eine Außenwand des Kreisringraumes (28, 47) ausbildender äußerer Zylinderabschnitt (24, 43) beider Halterungsteile (22, 41) unterseitig einen horizontal vorstehenden, umlaufenden Rand (26, 45) aufweist.

8. Spender nach einem der vorhergehenden Ansprüche, **dadurch gekennzeichnet, dass** beide Halterungsteile (22, 41) formidentisch ausgebildet sind.

9. Spender nach einem der vorhergehenden Ansprüche, **dadurch gekennzeichnet, dass** zwei Vorratsräume (4) und zwei Pumpkammern (8) und zwei unabhängig voneinander zur Ausgabe von Masse (M) betätigbare Spenderköpfe (12) ausgebildet sind, wobei ein Spenderkopf (12) eine eine Außenfläche bildende Spenderkopfwandung (57) aufweist, die in Überdeckung und relativ zu einem Festteil (55) des Spenders (1) geführt und relativ dazu beweglich ist, dass die Spenderkopfwandung (57) beider Spenderköpfe (12) auf einem Teil ihres Umfangs relativ zu der Spenderkopfwandung (57) des anderen Spenderkopfes (12) geführt und beweglich ist und dass die Spenderkopfwandung (57) in dem Bereich, in dem sie relativ zu dem Festteil (55) des Spenders (1) beweglich ist, in einer Richtung senkrecht zur Betätigungsrichtung des Spenderkopfes (12) einen geraden Wandungsabschnitt (58) aufweist.

10. Spender nach Anspruch 9, **dadurch gekennzeichnet, dass** ein Spenderkopf (12) eine Ausgabeöffnung (38) aufweist, aus welcher die Masse (M) mit einer im Wesentlichen rechtwinklig zur Betätigungsrichtung des Spenderkopfes (12) gegebenen Ausgaberichtung ausgebbar ist.

11. Spender nach einem der Ansprüche 9 oder 10, **dadurch gekennzeichnet, dass** eine Pumpkammer (8) eine in Betätigungsrichtung (r) des Spenderkopfes (12) verlaufende Mittelachse (x) aufweist und dass in einem Querschnitt, in dem beide Mittelachsen (x) der Pumpkammern (8) den größten Abstand zueinander aufweisen, die in diesen Querschnitt projizierten Ausgabeöffnungen (38) zu beiden Mittelachsen (x) und zueinander versetzt angeordnet sind.

12. Spender nach Anspruch 11, **dadurch gekennzeichnet, dass** die Versetzung zu dem gerade verlaufenden Wandungsabschnitt (58) der Spenderkopfwandung (57) gegeben ist.

13. Spender nach einem der Ansprüche 9 bis 12 **dadurch gekennzeichnet, dass** in jedem Vorratsraum (4) ein Nachlaufkolben (6) angeordnet ist, der eine der Pumpkammer (8) zugewandte Ausformung (52) aufweist, zum Einfahren in eine vorratsraumseitige Anschlussöffnung der Pumpkammer (8), wobei jede eine Pumpkammer (8) eine in Betätigungsrichtung (r) des Spenderkopfes (12) verlaufende Mittelachse (x) aufweist und in einem Querschnitt, in dem beide Mittelachsen (x) der Pumpkammern (8) den größten Abstand zueinander aufweisen, die Ausformungen (52) bezüglich jedes Nachlaufkolbens (6) außermittig ausgebildet sind.

14. Spender nach Anspruch 13, **dadurch gekennzeichnet, dass** ein Nachlaufkolben (6) einen Grundriss aufweist, mit einer teilweise gerade und teilweise gekrümmt verlaufenden Randkante.

## Claims

1. A dispenser (1) for liquid to pasty compositions (M), comprising a pump chamber (8), accommodating a pump piston (32) arranged on a pump piston part, wherein the pump chamber (8) has an inlet valve (9) and an outlet valve (10), a storage space (4) and a dispenser head (12), wherein the dispenser head (12) is vertically movable for dispensing the composition (M) in the usual dispenser position, wherein additionally a dispensing channel (37) is formed in the dispenser head (12), wherein additionally the dispenser head (12) has a head cover (35), and the outlet valve (10) has a clamped flexible annular part (51), **characterized in that** a holder part (22, 41) on the pump chamber end and on the storage space end for the outlet valve (10) and/or the inlet valve (9) has a journal (31, 48) extending toward the head cover (35) in the installed state, passing centrally through an annular part (30, 51) provided in an outlet valve (10) as well as in an inlet valve (9), and **in that** the two holder parts (22, 41) have an annular space (28, 47) that is open toward the bottom in the installed state starting from a holder part cover (23, 42) having the journal (31, 48).

2. The dispenser according to claim 1, **characterized in that** the shape (40) of the head cover (35) facing the pump chamber (8) serves to hold the annular part (51).

3. The dispenser according to any one of the preceding claims, **characterized in that** the annular part (51) of the outlet valve (10) is directly opposite the head cover (35) for a part of its top side.

4. The dispenser according to any one of the preceding claims, **characterized in that** a space (39) between the annular part (51) and the head cover (35) has the composition (M) which has passed through the outlet valve (10) flowing through it essentially at a right angle to the flow-through direction in the pump chamber (8).

5. The dispenser according to any one of the preceding claims, **characterized in that** the pump chamber (8) has an upper cylindrical section (43), which is moved by the dispenser head (12) and is bordered by a pump chamber cover, having flow-through openings (49) to the annular part (51), and **in that** an outside diameter of the annular part (51) exceeds the inside diameter of the cylindrical section (43).

6. The dispenser according to any one of the preceding claims, **characterized in that** an the inner cylindrical section (27, 46) forming annular space (28, 47) has locking bead formations (50) on the inside of the two holder parts (22, 41) .

7. The dispenser according to claim 6, **characterized in that** an outer cylindrical section (24, 43) of the two holder parts (22, 41) forming the outside wall of the annular space (28, 47) has a horizontally protruding peripheral edge (26, 45) on the lower side.

8. The dispenser according to claim 6, **characterized in that** the two holder parts (22, 41) are designed to be identical in shape.

9. The dispenser according to any one of the preceding claims, **characterized in that** two storage spaces (4) and two pump chambers (8) and two dispenser heads (12) that can be operated independently of one another for dispensing the composition (M) are provided for, wherein one dispenser head (12) has a dispenser head wall (57), which forms an outside surface and is guided in correspondence with and relative to a fixed part (55) of the dispenser (1) and is movable relative thereto, that the dispenser head wall (57) of the two dispenser heads (12) is guided and is movable on a portion of its circumference relative to the dispenser head wall (57) of the other dispenser head (12), and that the dispenser head wall (57) has a straight wall section (58) in the area in which it is movable in relation to the fixed part (55) of the dispenser (1) in a direction perpendicular to the direction of operation of the dispenser head (12).

10. The dispenser according to claim 9, **characterized in that** a dispenser head (12) has a dispensing opening (38) out of which the composition (M) can be dispensed with a dispensing direction essentially at a right angle to the direction of operation of the dispenser head (12).

11. The dispenser according to claim 9 or 10, **characterized in that** a pump chamber (8) has a central axis (x) running in the direction of operation (r) of the dispenser head (12), and **in that** in a cross section in which the two central axes (x) of the pump chambers (8) are at the greatest distance from one another, the dispensing openings (38) projected into this cross section are arranged on both central axes (x) and with an offset from one another.

12. The dispenser according to claim 11, **characterized in that** the offset is in relation to the straight wall section (58) of the dispenser head wall (57).

13. The dispenser according to one of the claims 9 to 12, **characterized in that** a follower piston (6) which is arranged in each storage space (4) has a shape (52) facing the pump chamber (8) for insertion into a connecting opening of the pump chamber (8) on the storage space end, wherein each pump chamber (8) has a central axis (x) running in the direction of operation (r) of the dispenser head (12) and the shapes (52) are designed eccentrically with respect to each follower piston (6) in a cross section in which the two central axes (x) of the pump chambers (8) area the greatest distance apart from one another.

14. The dispenser according to claim 13, **characterized in that** a follower piston (6) has an outline with a bordering edge that is partially straight and partially curved.

## Revendications

1. Distributeur (1) pour substances liquides à pâteuses (M), avec une chambre de pompe (8) recevant un piston de pompe (32) agencé sur une pièce de piston de pompe, dans lequel la chambre de pompe (8) présente une valve d'entrée (9) et une valve de sortie (10), une chambre de stockage (4) et une tête de distributeur (12), dans lequel la tête de distributeur (12) est, dans la position de distribution habituelle, mobile verticalement pour distribuer de la substance (M), dans lequel en outre un canal de décharge (37) est formé dans la tête de distributeur (12), la tête de distributeur (12) présente un plafond de tête (35) et la valve de sortie (10) présente une partie annulaire circulaire flexible (51) qui est enserrée, **caractérisé en ce qu'**une partie de maintien (22, 41) du côté de la chambre de pompe et du côté de la chambre de stockage pour la valve de sortie (10), respectivement la valve d'entrée (9), présente respectivement un téton (31, 48) qui, à l'état monté, fait saillie vers le plafond de tête (35) et qui traverse en son centre la partie annulaire circulaire (30, 51) prévue dans la valve de sortie (10), ainsi qu'une partie annulaire circulaire (51) prévue dans la valve d'entrée (9), et **en ce que**, à l'état monté, les deux parties de maintien (22, 41) présentent un espace annulaire circulaire (28, 47) ouvert vers le bas à partir d'un plafond de partie de maintien (23, 42) présentant le téton (31, 48).

2. Distributeur selon la revendication 1, **caractérisé en ce qu'**une formation (40) du plafond de tête (35) orientée vers la chambre de pompe (8) sert au maintien de la partie annulaire circulaire (51).

3. Distributeur selon l'une des revendications précédentes, **caractérisé en ce que** la partie annulaire circulaire (51) de la valve de sortie (10) est située directement en vis-à-vis du plafond de tête (35) sur une partie de sa face supérieure.

4. Distributeur selon l'une des revendications précédentes, **caractérisé en ce qu'**un espace (39) entre la partie annulaire circulaire (51) et le plafond de tête (35) est traversé par la substance (M) qui a traversé la valve de sortie (10), sensiblement à angle droit par rapport à la direction d'écoulement dans la chambre de pompe (8).

5. Distributeur selon l'une des revendications précédentes, **caractérisé en ce que** la chambre de pompe (8) comprend une partie cylindrique supérieure (43) déplacée par la tête de distributeur (12), qui est délimitée par un plafond de chambre de pompe présentant des ouvertures d'écoulement (49) vers la partie annulaire circulaire (51), et **en ce qu'**un diamètre extérieur de la partie annulaire circulaire (51) excède un diamètre intérieur de la partie cylindrique (43).

6. Distributeur selon l'une des revendications précédentes, **caractérisé en ce qu'**une partie cylindrique intérieure (27, 46) formant l'espace annulaire circulaire (28, 47) présente des formations de bourrelets d'encliquetage (50) sur l'intérieur des deux parties de maintien (22, 41).

7. Distributeur selon la revendication 6, **caractérisé en ce qu'**une partie cylindrique extérieure (24, 43) des deux parties de maintien (22, 41) formant une paroi extérieure de l'espace annulaire circulaire (28, 47) présente côté inférieur un bord circonférentiel (26, 45) faisant saillie horizontalement.

8. Distributeur selon l'une des revendications précédentes, **caractérisé en ce que** les deux parties de maintien (22, 41) sont de forme identique.

9. Distributeur selon l'une des revendications précédentes, **caractérisé en ce que** sont formées deux chambres de stockage (4) et deux chambres de pompage (8), ainsi que deux têtes de distribution (12) pouvant être actionnées indépendamment l'une de l'autre pour distribuer de la substance (M), dans lequel une tête de distributeur (12) présente une paroi de tête de distributeur (57) formant une surface extérieure, qui est guidée en chevauchement et par rapport à une partie fixe (55) du distributeur (1) et est déplaçable par rapport à celle-ci, **en ce que** la paroi de tête de distributeur (57) des deux têtes de distribution (12) est guidée et déplaçable sur une partie de sa circonférence par rapport à la paroi de tête de distributeur (57) de l'autre tête de distributeur (12), et **en ce que** la paroi de tête de distributeur (57) présente une partie de paroi droite (58) dans la zone où elle est déplaçable par rapport à la partie fixe (55) du distributeur (1) dans une direction perpendiculaire à la direction d'actionnement de la tête de distributeur (12).

10. Distributeur selon la revendication 9, **caractérisé en ce qu'**une tête de distributeur (12) présente une ouverture de décharge (38) à partir de laquelle de la substance (M) peut être déchargée avec une direction de décharge sensiblement perpendiculaire à la direction d'actionnement de la tête de distributeur (12).

11. Distributeur selon l'une des revendications 9 ou 10, **caractérisé en ce qu'**une chambre de pompe (8) présente un axe central (x) s'étendant dans la direction d'actionnement (r) de la tête de distributeur (12) et **en ce que**, dans une section transversale dans laquelle les deux axes centraux (x) des chambres de pompe (8) présente entre eux le plus grand éloignement, les ouvertures de décharge (38) projetées dans cette section transversale sont agencées décalées par rapport aux deux axes centraux (x) et l'une par rapport à l'autre.

12. Distributeur selon la revendication 11, **caractérisé en ce que** le décalage est défini par rapport à la partie de paroi droite (58) de la paroi de tête du distributeur (57).

13. Distributeur selon l'une quelconque des revendications 9 à 12, **caractérisé en ce qu'**un piston suiveur (6) est agencé dans chaque chambre de stockage (4) lequel présente une formation (52) orientée vers la chambre de pompe (8) pour la pénétration dans une ouverture de raccordement de la chambre de pompe (8) du côté de la chambre de stockage, dans lequel chaque chambre de pompe (8) présente un axe central (x) s'étendant dans la direction d'actionnement (r) de la tête de distributeur (12) et, dans une section transversale dans laquelle les deux axes centraux (x) des chambres de pompe (8) présente entre eux le plus grand éloignement, les formations (52) sont formées de manière excentrée par rapport à chaque piston suiveur (6).

14. Distributeur selon la revendication 13, **caractérisé en ce qu'**un piston suiveur (6) présente un contour de base avec un bord en partie droit et en partie courbé.
